**Europäisches Patentamt**

**European Patent Office**

**Office européen des brevets**

(19)

(11) **EP 1 222 654 B1**

(12) **EUROPÄISCHE PATENTSCHRIFT**

(45) Veröffentlichungstag und Bekanntmachung des Hinweises auf die Patenterteilung:
**24.11.2004 Patentblatt 2004/48**

(21) Anmeldenummer: **00956135.8**

(22) Anmeldetag: **10.08.2000**

(51) Int Cl.$^7$: **G10L 15/10**

(86) Internationale Anmeldenummer:
**PCT/DE2000/002686**

(87) Internationale Veröffentlichungsnummer:
**WO 2001/013361 (22.02.2001 Gazette 2001/08)**

(54) **BERECHNUNG VON ABSTÄNDEN ZWISCHEN EINEM MERKMALSVEKTOR UND MEHREREN VERGLEICHSVEKTOREN**

METHOD, DEVICE AND COMPUTER PROGRAM PRODUCT FOR CALCULATING THE DIFFERENTIALS BETWEEN A CHARACTERISTIC VECTOR AND SEVERAL COMPARATIVE VECTORS

PROCEDE, DISPOSITIF ET PRODUIT PROGRAMME D'ORDINATEUR POUR LE CALCUL D'ECARTS ENTRE UN VECTEUR CARACTERISTIQUE ET PLUSIEURS VECTEURS DE COMPARAISON

(84) Benannte Vertragsstaaten:
**DE FR GB IT**

(30) Priorität: **18.08.1999 DE 19939101**

(43) Veröffentlichungstag der Anmeldung:
**17.07.2002 Patentblatt 2002/29**

(73) Patentinhaber: **SIEMENS AKTIENGESELLSCHAFT**
**80333 München (DE)**

(72) Erfinder:
 • **HÖGE, Harald**
 **D-82131 Gauting (DE)**
 • **MARSCHALL, Erwin**
 **D-82467 Garmisch-Partenkirchen (DE)**

(56) Entgegenhaltungen:
 **US-A- 4 908 865      US-A- 4 991 216**
 **US-A- 5 572 624**

 • **TAKAHIKO KAWATANI: "HANDPRINTED NUMERALS RECOGNITION BY LEARNING DISTANCE FUNCTION" SYSTEMS & COMPUTERS IN JAPAN,US,SCRIPTA TECHNICA JOURNALS. NEW YORK, Bd. 25, Nr. 10, 1. September 1994 (1994-09-01), Seiten 62-71, XP000483410 ISSN: 0882-1666**
 • **PATENT ABSTRACTS OF JAPAN vol. 1995, no. 05, 30. Juni 1995 (1995-06-30) -& JP 07 036477 A (RICOH CO LTD), 7. Februar 1995 (1995-02-07)**

**Beschreibung**

Die Erfindung betrifft ein Verfahren, eine Anordnung und ein Computerprogrammerzeugnis zur Berechnung von Abständen zwischen einem Merkmalsvektor und mehreren Vergleichsvektoren.

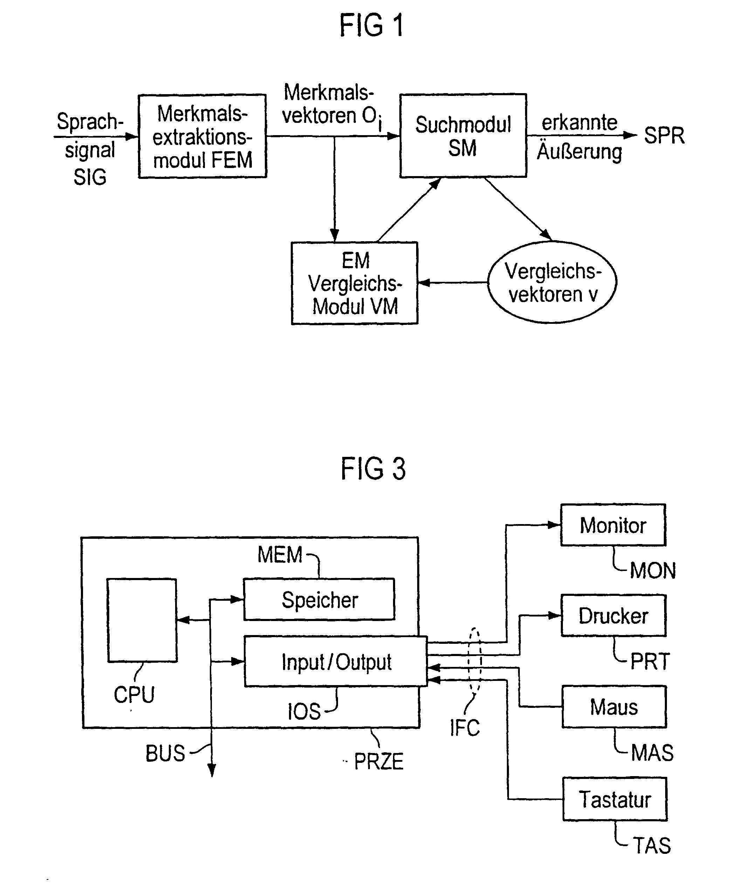

Ein System zur Erkennung natürlich gesprochener Sprache hat insbesondere einen Aufbau wie in **Fig.1** dargestellt. Aus einem Sprachsignal SIG werden anhand eines Mermkalsextraktionsmoduls FEM Merkmalsvektoren $O_i$ ermittelt. Die Merkmalsvektoren $O_i$ fließen in ein Suchmodul SM ein, das anhand von Vergleichsvektoren v in einem Vergleichsmodul EM nach einer erkannten Außerung SPR sucht. In dem Merkmalsextraktionsmodul FEM werden aus einem Sprachsignalabschnitt des digitalisierten Sprachsignals ca. alle 10ms bis 20ms Merkmale berechnet, die zu diskreten Zeitpunkten als Merkmalsvektoren $O_1$, $O_2$, ... (für die Zeitpunkte $t_1$, $t_2$, ...) zur Verfügung stehen. In dem Suchmodul SM wird jeder Merkmalsvektor $O_i$ mit den Komponenten

$$O_i = o_i^1, ..., o_i^M \tag{1}$$

mit

Vergleichsvektoren $V_{lk}$ mit den Komponenten

$$V_{lk} = v_{lk}^1, ..., v_{lk}^M; \quad k = 1, ..., K_l; \quad l = 1, ..., L \tag{2}$$

verglichen.

In der Praxis liegt die Dimension M der Vektoren zweckmäßig in einem Bereich von 10 bis 50. Der Index l der Vergleichsvektoren kennzeichnet eine parametrische Beschreibung eines bestimmten Signalabschnitts eines Lautes, zum Beispiel eines Wortes. Ein derartiger Abschnitt kann ein Phonem, ein Diphon, ein n-Phon oder ein beliebiger Wortteil sein. Der Index k kennzeichnet verschiedene parametrische Darstellungen $v_{lk}$ desselben Signalabschnitts. Dadurch werden unterschiedliche Eigenschaften von Sprechern oder Übertragungskanälen abgedeckt. Der Vergleich selbst erfolgt in dem Vergleichsmodul EM, wobei zu jedem Zeitpunkt $t_i$ Abstände der Form

$$a_{lk} = \sum_{j=1}^{M} \left\| o_i^j - v_{lk}^j \right\|; \quad k = 1, ..., K_l; \quad l = 1, ..., L \tag{3}$$

und lokale Maße der Form

$$s_l = \operatorname*{Min}_{k} a_{lk} \tag{4}$$

ermittelt werden. Das Abstandsmaß $\|...\|$ ist bevorzugt eine Betragsform oder ein gewichteter bzw. ungewichteter quadratischer Abstand. In Gleichung (3) wird angenommen, daß es L verschiedene Wortabschnitte gibt und daß jeder Wortabschnitt 1 durch $K_l$ verschiedene Vergleichsvektoren beschrieben wird. $K_l$ liegt in der Größenordnung von 1 bis 100 und L in der Größenordnung von 10 bis 10.000. Bei einer HMM-Methode (vlg. [1]) wird $K_l$ als "Anzahl von Moden eines Wortabschnittes" bezeichnet. Die lokalen Abstände $s_l$ in Gleichung (4) werden in dem Suchmodul SM mit einer Methode der dynamischen Programmierung oder des Viterbialgorithmus (siehe [1]) verrechnet. Zweckmäßig werden zu einem Zeitpunkt $t_i$ nicht alle L lokalen Maße $s_l$ benötigt, sondern nur diejenigen, die in einem gewissen "Beam" liegen. Der Suchmodul SM führt dabei insbesondere eine Reduktion des Suchraums durch, er fordert von dem Vergleichsmodul EM nur eine Untermenge aller möglichen lokalen Abstandsmaße $s_l$ an. Dadurch resultiert eine Einsparung des Rechenaufwands. Hierbei sei bemerkt, das oben genannter "Beam" eine Einschränkung des insgesamt möglichen Suchraums vornimmt; nur die verheißungsvollen Bereiche des Suchraums werden für die weitere Verarbeitung genutzt, der restliche Suchraum wird ausgespart. Dies ist insbesondere geeignet für die Erkennung fließender Sprache.

Die Berechnung der lokalen Maße $s_l$ erfordert trotzdem eine erhebliche Rechenleistung. Insbesondere bei Ablauf mehrerer paralleler Erkennungsprozesse, zum Beispiel in einem Vermittlungsrechner, der 1000 Kanäle gesprochener Sprache erkennen soll, ist der Rechenaufwand deutlich über dem derzeit Machbaren.

Zur weiteren Reduktion des Rechenaufwandes bei der Ermittlung der Werte $a_{lk}$ und $s_l$ gemäß Gleichung (3) und Gleichung (4) sind zwei Verfahren bekannt:

- Tree-Search-Verfahren (siehe [2]) und
- Reduktionsverfahren.

Bei dem Tree-Search-Verfahren werden diejenigen lokalen Maße $s_l$ genau nach den Gleichungen (3) und (4) berechnet, bei denen der Merkmalsvektor einen geringeren Abstand zu den Vergleichsvektoren besitzt. Wortabschnitte l mit großem Abstand werden grob berechnet, indem beispielsweise nur eine Mode k für die Bestimmung der lokalen Maße $s_l$ herangezogen wird. Dieses Verfahren bringt Vorteile, falls grundsätzlich alle lokalen Maße $s_l$ zu berechnen sind.

Bei dem Reduktionsverfahren wird die Dimension M des Merkmalsvektors reduziert. Dadurch sinkt grundsätzlich die Erkennungsrate, da nicht länger die gesamte zur Verfügung stehende Information zur Erkennung benutzt wird (siehe [4]). Um zu ermitteln, welche Komponenten des Merkmalsvektors hinsichtlich ihrer Diskriminierungsfunktionalität besser sind als andere, hat sich ein LDA-Verfahren (siehe [3]) bewährt. Dabei werden die Komponenten der Merkmalsvektoren nach deren Wichtigkeit (bezüglich hoher Erkennungsrate) geordnet.

Infolgedessen werden beim Reduktionsverfahren diejenigen Komponenten weggelassen, bei denen eine Signifikanz unterhalb eines vorgegebenen Schwellwerts liegt.

Auch die Vergleichsvektoren werden vorzugsweise aus den Merkmalsvektoren in einem gesonderten Trainingsverfahren bestimmt. Dabei wird auch für die Vergleichsvektoren ein LDA-Verfahren angewandt, das die Komponenten der Merkmalsvektoren hinsichtlich deren Diskriminierungsfähigkeit sortiert.

Bei dem Reduktionsverfahren ist es von Nachteil, daß durch Wegstreichen von Komponenten des Merkmalsvektors auf Information verzichtet wird, die hinsichtlich der Erkennungsleistung gesprochener Sprache wichtig ist.

Die **Aufgabe** der Erfindung besteht darin, die Berechnung von Abständen zwischen einem Merkmalsvektor und mehreren Vergleichsvektoren zu ermöglichen, wobei eine Optimierung zwischen Rechenaufwand und hoher Erkennungsrate insbesondere bei der Sprachverarbeitung ermöglicht wird.

Die Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Verfahren zur Berechnung von Abständen zwischen einem Merkmalsvektor und mehreren Vergleichsvektoren angegeben, wobei der Merkmalsvektor und die mehreren Vergleichsvektoren jeweils mehrere Komponenten aufweisen. Für die Komponenten des Merkmalsvektors wird jeweils deren Diskriminierungsfähigkeit ermittelt. Für diejenigen Komponenten des Merkmalsvektors, deren Diskriminierungsfähigkeit schlechter als ein vorgegebener Schwellwert ist, wird mindestens ein erster Teilabstand zu mindestens einer Gruppe von Komponenten der Vergleichsvektoren ermittelt. Für diejenigen Komponenten des Merkmalsvektors, deren Diskriminierungsfähigkeit besser als der vorgegebene Schwellwert ist, werden zweite Teilabstände zu den entsprechenden Komponenten der Vergleichsvektoren bestimmt. Aus dem mindestens einen ersten Teilabstand und den zweiten Teilabständen werden die Abstände von dem Merkmalsvektor zu den mehreren Vergleichsvektoren ermittelt.

Jeder Merkmalsvektor umfaßt eine bestimmte Anzahl von Komponenten, die vorzugsweise nach einem bestimmten Schema, bspw. deren Diskriminierungsfähigkeit sortiert sind. Jeder Vergleichsvektor umfaßt die gleiche Anzahl von Komponenten, die ebenfalls zweckmäßig nach deren Diskriminierungsfähigkeit sortiert sind. Eine Abstandsberechnung erfolgt durch Vergleich der einander zugehörigen Komponenten innerhalb der Vektoren (Merkmalsvektor bzw. Vergleichsvektor).

Gibt es eine Vielzahl von Vergleichsvektoren, so kann ein Vergleich der Komponente des Merkmalsvektors mit der zugehörigen Komponente jedes Vergleichsvektors durchgeführt werden. Dies lohnt sich vor allem dann, wenn die Komponente des Merkmalsvektors eine hohe Diskriminierungsfähigkeit aufweist.

Weist hingegen die Komponente des Merkmalsvektors eine niedrige Diskriminierungsfähigkeit auf, so erfolgt bevorzugt eine Reduktion der Anzahl der durchzuführenden Vergleiche. Die Komponente wird nicht mehr mit jeder zugehörigen Komponente aller Vergleichsvektoren verglichen, sondern die Werte für die Komponente werden innerhalb der Vergleichsvektoren zu mindestens einer Gruppe zusammengefaßt. Diese Gruppe erhält einen Wert, der mit dem Wert der Komponente des Merkmalsvektors verglichen wird. Dadurch ergibt sich eine signifikante Einsparung von Rechenaufwand, da für wenig signifikante Komponenten des Merkmalsvektors ein reduzierter Vergleich, z.B. mit einem Schwerpunkt über alle Werte der Vergleichsvekoren für die zugehörige Komponente, erfolgt.

Hierbei sei angemerkt, daß es zweckmäßig sein kann, anstelle des Schwellwertes mehrere Schwellwerte vorzusehen und bestimmte (im Hinblick auf ihre Diskriminierungsfähigkeit schlechte) Komponenten des Merkmalsvektors nicht weiter zu berücksichtigen.

Eine Weiterbildung besteht darin, daß die Sortierung entsprechend der Diskriminierungsfähigkeit mittels eines LDA-Verfahrens erfolgt. Dies gilt für Merkmalsvektor und Vergleichsvektoren gleichermaßen.

Eine andere Weiterbildung besteht darin, daß ein Wert für eine Gruppe (aus Komponenten von Vergleichsvektoren, die einer Komponente des Merkmalsvektors zugeordnet sind) anhand einer Mittelwertbildung bestimmt wird. Insbesondere ist es von Vorteil, daß durch die Mittelwertbildung das Verfahren robuster wird, da statistische Schwankungen mit verhältnismäßig niedrigem Diskriminierungsgehalt durch die Mittelwertbildung deutlich reduziert werden.

Eine andere Ausgestaltung besteht darin, daß anhand des ermittelten Abstandes zwischen Merkmalsvektor und Vergleichsvektoren eine Mustererkennung durchgeführt wird. Dabei wird insbesondere der nächstliegende Vergleichsvektor als zu dem Merkmalsvektor passendes Muster erkannt.

Hierbei sei angemerkt, daß der Abstand zwischen Merkmalsvektor und Vergleichsvektoren auf unterschiedliche Art bestimmt werden kann. Ein Beispiel für solche einen Abstand ist die Norm der Komponenten, ein anderer der quadratische Abstand.

Eine andere Weiterbildung besteht darin, daß das beschriebene Verfahren in einem Spracherkenner eingesetzt wird.

Weiterhin wird zur Lösung der Aufgabe eine Anordnung zur Berechnung von Abständen zwischen einem Merkmalsvektor und mehreren Vergleichsvektoren angegeben, wobei der Merkmalsvektor und die mehreren Vergleichsvektoren jeweils mehrere Komponenten aufweisen, bei der eine Prozessoreinheit vorgesehen ist, die derart eingerichtet ist, daß

a) für die Komponenten des Merkmalsvektors jeweils deren Diskriminierungsfähigkeit ermittelbar ist;

b) für diejenigen Komponenten des Merkmalsvektors, deren Diskriminierungsfähigkeit schlechter als ein vorgegebener Schwellwert ist, mindestens ein erster Teilabstand zu mindestens einer Gruppe von Komponenten der Vergleichsvektoren ermittelbar ist;

c) für diejenigen Komponenten des Merkmalsvektors, deren Diskriminierungsfähigkeit besser als der vorgegebene Schwellwert ist, zweite Teilabstände zu den entsprechenden Komponenten der Vergleichsvektoren bestimmbar sind;

d) aus dem mindestens einen ersten Teilabstand und den zweiten Teilabständen die Abstände von dem Merkmalsvektor zu den mehreren Vergleichsvektoren ermittelbar sind.

Auch wird zur Lösung der Aufgabe ein Computerprogrammerzeugnis zur Berechnung von Abständen zwischen einem Merkmalsvektor und mehreren Vergleichsvektoren angegeben, wobei der Merkmalsvektor und die mehreren Vergleichsvektoren jeweils mehrere Komponenten aufweisen. Das Computerprogrammerzeugnis ist auf eine Prozessoreinheit derart ablauffähig, daß

a) für die Komponenten des Merkmalsvektors jeweils deren Diskriminierungsfähigkeit ermittelbar ist;

b) für diejenigen Komponenten des Merkmalsvektors, deren Diskriminierungsfähigkeit schlechter als ein vorgegebener Schwellwert ist, mindestens ein erster Teilabstand zu mindestens einer Gruppe von Komponenten der Vergleichsvektoren ermittelbar ist;

c) für diejenigen Komponenten des Merkmalsvektors, deren Diskriminierungsfähigkeit besser als der vorgegebene Schwellwert ist, zweite Teilabstände zu den entsprechenden Komponenten der Vergleichsvektoren bestimmbar sind;

d) aus dem mindestens einen ersten Teilabstand und den zweiten Teilabständen die Abstände von dem Merkmalsvektor zu den mehreren Vergleichsvektoren ermittelbar sind.

Die Anordnung sowie das Computerprogrammerzeugnis sind insbesondere geeignet zur Durchführung des erfindungsgemäßen Verfahrens oder einer seiner vorstehender erläuterten Weiterbildungen.

Ausführungsbeispiele der Erfindung werden nachfolgend anhand der Zeichnung dargestellt und erläutert.

Es zeigen

Fig.1    einen Aufbau eines Spracherkennungssystems;

Fig.2    ein Blockdiagramm mit Schritten eines Verfahrens zur Berechnung von Abständen zwischen einem Merkmalsvektor und mehreren Vergleichsvektoren;

Fig.3    eine Prozessoreinheit.

Fig.1 ist bereits in der Beschreibungseinleitung erläutert worden.

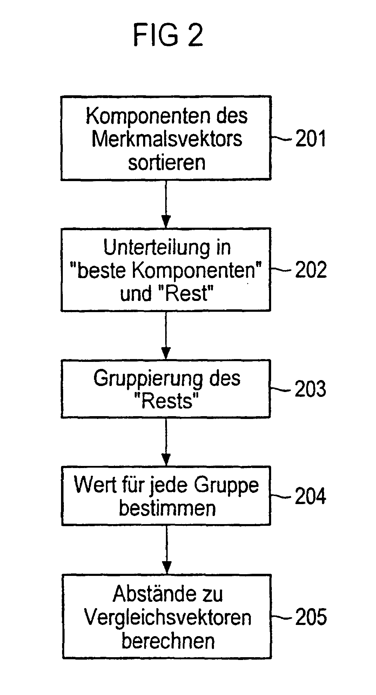

In **Fig.2** ist ein Blockdiagramm mit Schritten eines Verfahrens zur Berechnung von Abständen zwischen einem Merkmalsvektor O und mehreren Vergleichsvektoren V dargestellt. In Anlehnung an die Notation in der Beschreibungseinleitung, werden für benötigte Abstände

$$\left\| o_i^j - \bar{v}_{lk}^j \right\|, \quad l = 1, ..., L; \quad k = 1, ..., \bar{K}_l \tag{5}$$

$1 \le \bar{K}_l < K_l$ nur solche Komponentenindizes j genau ermittelt, bei denen die Merkmalskomponente $o^j$ entscheidend zu einer hohen Erkennungsrate beiträgt, das heißt gut diskriminierbar ist. Der Rechenaufwand wird dadurch reduziert, daß die Modenanzahl $\bar{K}_l$ abhängig von j variiert wird. Für einen gegebenen Wortabschnittsindex l und eine weniger wichtige Komponente j werden z.B. alle ursprünglichen Vergleichsparameter $v_{l,k}^j$, die zu den Moden k=1, ..., $K_l$ gehören, zu einer einzigen Mode

$$\bar{v}_l^j = \frac{1}{k_l} \sum_{k=1}^{K_l} v_{lk}^j \tag{6}$$

zusammengefaßt.

Dadurch reduziert sich der Aufwand zur Berechnung von Gleichung (5) um einen Faktor $K_l$-1, da für dieses l und j nur ein einziger Abstand

$$\left\| o_i^j - \bar{v}_l^j \right\|$$

berechnet werden muß. Wird die Berechnung von Gleichung (5) und Gleichung (6) für alle Wortabschnitte l=1, ..., L durchgeführt, ergibt sich eine mittlere Reduzierung des Rechenaufwandes um den Faktor

$$\bar{f}_l = \frac{1}{L} \sum_{l=1}^{L} (K_l - 1) \tag{7}$$

für diese Komponente j.

In Gleichung (6) wurde der Fall beschrieben, daß alle $v_{l,k}^j$ zu einem einzigen Wert zusammengefaßt werden ($\bar{K}_l = 1$). Allgemein sind Zwischenstufen von 1 bis $K_l$ Moden möglich. Abhängig von der Wichtigkeit der Merkmalskomponente $o_j$ kann die Modenanzahl mehr oder weniger stark reduziert werden. Insbesondere ist die Reduzierung derart zu bestimmen, daß die Erkennungsrate möglichst wenig abnimmt. Besonders geeignet ist hierbei das LDA-Verfahren zur Ordnung der Komponenten des Merkmalsvektors entsprechend ihrer Bedeutung (Diskriminierungsfähigkeit). Geht man in der folgenden Notation davon aus, daß j=1 der wichtiges Index und j=M der unwichtigste Index ist, so können alle Vergleichsparameter für j=$M_1$,...,M nach Gleichung (6) berechnet werden. Ab einem Index $M_l$ haben die Merkmalskomponenten $o_j$ eine geringe Bedeutung. Demnach ergibt sich aus Gleichung (3) die folgende Beziehung

$$a_l = \sum_{j=M_1+1}^{M} \left\| o_i^j - \bar{v}_l^j \right\|; \quad l = 1, ..., L \tag{8}$$

$$a_{lk} = a_l + \sum_{j=1}^{M_1} \left\| o_i^j - v_{l,k}^j \right\|; \quad k = 1, ..., K_l; \ l = 1, ..., L \tag{9}.$$

Bei Einsatz der Gleichung (7) und M=24, $M_l$=12 ergeben sich Reduktionen im Rechenaufwand in einer Größenordnung von ca. 30%.

In Fig.2 ist schematisch der Ablauf des Verfahrens zusammengefaßt. In einem Block 201 werden die Komponenten des Merkmalsvektors sortiert, vorzugsweise in der Reihenfolge ihrer Diskriminierungsfähigkeit. In einem Schritt 202 erfolgt eine Unterteilung in die besten Komponenten und den Rest, das heißt alle Komponenten, die keine besten Komponenten sind. In einem Schritt 203 wird für jede Komponente des Merkmalsvektors aus diesem "Rest" in den Vergleichsvektoren mindestens eine Gruppe bestimmt und vorzugsweise für jede Gruppe ein Wert, insbesondere ein Mittelwert aus den Komponenten der Vergleichsvektoren dieser Gruppe, bestimmt (siehe Schritt 204). In einem Schritt 205 wird von der Komponente des Merkmalsvektors ein Abstand zu der mindestens einen Gruppe ermittelt. Für diejenigen Komponenten des Merkmalsvektors, die nicht in jedem "Rest" enthalten sind, werden die Abstände zu allen zugehörigen Komponenten der Vergleichsvektoren bestimmt.

In **Fig.3** ist eine Prozessoreinheit PRZE dargestellt. Die Prozessoreinheit PRZE umfaßt einen Prozessor CPU, einen Speicher SPE und eine Input/Output-Schnittstelle IOS, die über ein Interface IFC auf unterschiedliche Art und Weise genutzt wird: Über eine Grafikschnittstelle wird eine Ausgabe auf einem Monitor MON sichtbar und/oder auf einem Drucker PRT ausgegeben. Eine Eingabe erfolgt über eine Maus MAS oder eine Tastatur TAST. Auch verfügt die Prozessoreinheit PRZE über einen Datenbus BUS, der die Verbindung von einem Speicher MEM, dem Prozessor CPU und der Input/Output-Schnittstelle IOS gewährleistet. Weiterhin sind an den Datenbus BUS zusätzliche Komponenten anschließbar, z.B. zusätzlicher Speicher, Datenspeicher (Festplatte) oder Scanner.

Literaturverzeichnis:

[1] N.Haberland et al.: Sprachunterricht - Wie funktioniert die computerbasierte Spracherkennung? c't 5/98, Seiten 120-125, Heinz Heise Verlag, 1998.

[2] E.Boccieri: Vector Quantization for the Efficient Computation of Continuous Density Likelihoods, Proc. ICASSP, pp. II/692-695, Minneapolis, USA, April 1993.

[3] Thomas W. Parsons: Voice and Speech Processing, pp. 182-188, McGraw Hill 1986.

[4] Patentschrift US-A-4 991 216.

**Patentansprüche**

1. Verfahren zur Berechnung von Abständen zwischen einem Merkmalsvektor eines Sprachsignalabschnittes eines digitalisierten Sprachsignals und mehreren Vergleichsvektoren,
   wobei der Merkmalsvektor und die mehreren Vergleichsvektoren jeweils mehrere Komponenten aufweisen,

   a) bei dem für die Komponenten des Merkmalsvektors jeweils deren Diskriminierungsfähigkeit ermittelt wird;
   b) bei dem für diejenigen Komponenten des Merkmalsvektors, deren Diskriminierungsfähigkeit schlechter als ein vorgegebener Schwellwert ist, mindestens ein erster Teilabstand zu mindestens einer Gruppe von Komponenten der Vergleichsvektoren ermittelt wird;
   c) bei dem für diejenigen Komponenten des Merkmalsvektors, deren Diskriminierungsfähigkeit besser als der vorgegebene Schwellwert ist, zweite Teilabstände zu den entsprechenden Komponenten der Vergleichsvektoren bestimmt werden;
   d) bei dem aus dem mindestens einen ersten Teilabstand und den zweiten Teilabständen die Abstände von dem Merkmalsvektor zu den mehreren Vergleichsvektoren ermittelt werden.

2. Verfahren nach Anspruch 1,
   bei dem die Komponenten des Merkmalsvektors mittels eines LDA-Verfahrens ihrer Diskrimationsfähigkeit nach sortiert werden.

3. Verfahren nach einem der vorhergehenden Ansprüche,
   bei dem die Komponenten der Vergleichsvektoren aus mehreren Merkmalsvektoren anhand eines Trainingsverfahrens ermittelt werden.

4. Verfahren nach Anspruch 3,

EP 1 222 654 B1

bei dem die Komponenten der Vergleichsvektoren mittels eines LDA-Verfahrens ihrer Diskriminierungsfähigkeit nach sortiert sind.

**5.** Verfahren nach einem der vorhergehenden Ansprüche,
bei dem als Wert für die Gruppe von Komponenten ein Mittelwert aus den Komponenten der Vergleichsvektoren bestimmt wird.

**6.** Verfahren nach einem der vorhergehenden Ansprüche,
bei dem anhand der Abstände eine Mustererkennung durchgeführt wird.

**7.** Verfahren nach einem der vorhergehenden Ansprüche,
bei dem der Vergleichsvektor mit dem geringsten Abstand als passender Vergleichsvektor bestimmt wird.

**8.** Verfahren nach einem der vorhergehenden Ansprüche zum Einsatz in einem Spracherkenner.

**9.** Anordnung zur Berechnung von Abständen zwischen einem Merkmalsvektor eines Sprachsignalabschnittes eines digitalisierten Sprachsignals und mehreren Vergleichsvektoren,
wobei der Merkmalsvektor und die mehreren Vergleichsvektoren jeweils mehrere Komponenten aufweisen,
bei der eine Prozessoreinheit vorgesehen ist, die derart eingerichtet ist, daß

a) für die Komponenten des Merkmalsvektors jeweils deren Diskriminierungsfähigkeit ermittelbar ist;
b) für diejenigen Komponenten des Merkmalsvektors, deren Diskriminierungsfähigkeit schlechter als ein vorgegebener Schwellwert ist, mindestens ein erster Teilabstand zu mindestens einer Gruppe von Komponenten der Vergleichsvektoren ermittelbar ist;
c) für diejenigen Komponenten des Merkmalsvektors, deren Diskriminierungsfähigkeit besser als der vorgegebene Schwellwert ist, zweite Teilabstände zu den entsprechenden Komponenten der Vergleichsvektoren bestimmbar sind;
d) aus dem mindestens einen ersten Teilabstand und den zweiten Teilabständen die Abstände von dem Merkmalsvektor zu den mehreren Vergleichsvektoren ermittelbar sind.

**10.** Computerprogrammerzeugnis zur Berechnung von Abständen zwischen einem Merkmalsvektor eines Sprachsignalabschnittes eines digitalisierten Sprachsignals und mehreren Vergleichsvektoren, wobei der Merkmalsvektor und die mehreren Vergleichsvektoren jeweils mehrere Komponenten aufweisen, das auf einer Prozessoreinheit derart abläuft, daß

a) für die Komponenten des Merkmalsvektors jeweils deren Diskriminierungsfähigkeit ermittelbar ist;
b) für diejenigen Komponenten des Merkmalsvektors, deren Diskriminierungsfähigkeit schlechter als ein vorgegebener Schwellwert ist, mindestens ein erster Teilabstand zu mindestens einer Gruppe von Komponenten der Vergleichsvektoren ermittelbar ist;
c) für diejenigen Komponenten des Merkmalsvektors, deren Diskriminierungsfähigkeit besser als der vorgegebene Schwellwert ist, zweite Teilabstände zu den entsprechenden Komponenten der Vergleichsvektoren bestimmbar sind;
d) aus dem mindestens einen ersten Teilabstand und den zweiten Teilabständen die Abstände von dem Merkmalsvektor zu den mehreren Vergleichsvektoren ermittelbar sind.

**Claims**

**1.** Method of calculating the differentials between a characteristic vector of a speech signal section of a digital speech signal and a number of comparative vectors, where the characteristic vector and number of comparative vectors each feature several components,

a) in which, for the components of the characteristic vector, its discrimination capability is determined in each case;
b) in which, for those components of the characteristic vector for which the discrimination capability is worse than a specified threshold value, at least a first part differential to at least one group of components of the comparative vectors is determined;
c) in which, for those components of the characteristic vector of which the discrimination capability is better than the specified threshold value, second part of differentials to the corresponding components of the comparative vectors are determined;

d) in which, from the at least one first part differential and the second part differentials, the differentials from the characteristic vector to the number of comparison vectors are determined.

2. Method in accordance with Claim 1,
in which the components of the characteristic vector are sorted by means of an LDA procedure in accordance with their discrimination capability.

3. Method according to one of the previous claims
in which the components of the comparative vectors of determined from a number of characteristic vectors on the basis of a training procedure.

4. Method in accordance with Claim 3,
in which the components of the comparative vectors are sorted by means of an LDA procedure in accordance with their discrimination capability.

5. Method according to one of the previous claims
in which an average value is determined from the components of the comparative vectors as a value for the group of components.

6. Method according to one of the previous claims,
in which a pattern recognition is performed on the basis of the differentials.

7. Method according to one of the previous claims,
in which the comparative vector with the lowest differential is determined as the appropriate comparative vector.

8. Method in accordance with one of the previous claims for use in a speech-recognition unit.

9. Arrangement for for calculating differentials between a characteristic vector of a speech signal section of a digitized speech signal and several comparative vectors,
where the characteristic vector and the several comparative vectors each feature several components,
where a processor unit is provided which is set up such that

   a) for the components of the characteristic vector their discrimination capability is able to be determined in each case;
   b) for those components of the characteristic vector for which the discrimination capability is worse than a specified threshold value, at least a first part differential to at least one group of components of the comparative vectors can be determined;
   c) for those components of the characteristic vector for which the discrimination capability is better than the prespecified threshold value, second part differentials to a corresponding components of the comparative vectors can be determined;
   d) the differentials from the several comparison vectors can be determined from the at least one first part differential and the second part differentials.

10. Computer program product for calculating differentials between a characteristic vector of a speech signal section of a digitized speech signal and several comparative vectors, where the characteristic vector and the several comparative vectors each feature several components which run on a processor unit in such a way that

   a) for the components of the characteristic vector their discrimination capability is able to be determined in each case;
   b) for those components of the characteristic vector for which the discrimination capability is worse than a specified threshold value, at least a first part differential to at least one group of components of the comparative vectors can be determined;
   c) for those components of the characteristic vector for which the discrimination capability is better than the prespecified threshold value, second part differentials to a corresponding components of the comparative vectors can be determined;
   d) the differentials from the several comparison vectors can be determined from the at least one first part differential and the second part differentials.

**Revendications**

1. Procédé pour le calcul d'écarts entre un vecteur caractéristique d'un segment de signal vocal d'un signal vocal numérisé et plusieurs vecteurs de comparaison, le vecteur caractéristique et les plusieurs vecteurs de comparaison ayant à chaque fois plusieurs composantes,

    a) dans lequel on détermine à chaque fois, pour les composantes du vecteur caractéristique, leur capacité de discrimination ;
    b) dans lequel on détermine, pour les composantes du vecteur caractéristique dont la capacité de discrimination est inférieure à une valeur seuil prédéfinie, au moins un premier écart partiel par rapport à au moins un groupe de composantes des vecteurs de comparaison ;
    c) dans lequel on détermine, pour les composantes du vecteur caractéristique dont la capacité de discrimination est supérieure à la valeur seuil prédéfinie, des seconds écarts partiels par rapport aux composantes correspondantes des vecteurs de comparaison ;
    d) dans lequel on détermine, à partir du, au moins un, premier écart partiel et des seconds écarts partiels, les écarts entre le vecteur caractéristique et les plusieurs vecteurs de comparaison.

2. Procédé selon la revendication 1,
dans lequel les composantes du vecteur caractéristique sont triées en fonction de leur capacité de discrimination au moyen d'une méthode d'analyse discriminante linéaire (LDA).

3. Procédé selon l'une des revendications précédentes,
dans lequel les composantes des vecteurs de comparaison sont déterminées à partir de plusieurs vecteurs caractéristiques à l'aide d'un procédé d'apprentissage.

4. Procédé selon la revendication 3,
dans lequel les composantes des vecteurs de comparaison sont triées en fonction de leur capacité de discrimination au moyen d'une méthode d'analyse discriminante linéaire.

5. Procédé selon l'une des revendications précédentes,
dans lequel on détermine, en tant que valeur pour le groupe de composantes, une moyenne des composantes des vecteurs de comparaison.

6. Procédé selon l'une des revendications précédentes,
dans lequel on exécute une reconnaissance des formes en se basant sur les écarts.

7. Procédé selon l'une des revendications précédentes,
dans lequel le vecteur de comparaison présentant l'écart le plus réduit est déterminé en tant que vecteur de comparaison adapté.

8. Procédé selon l'une des revendications précédentes destiné à être utilisé dans un reconnaisseur vocal.

9. Dispositif pour le calcul d'écarts entre un vecteur caractéristique d'un segment de signal vocal d'un signal vocal numérisé et plusieurs vecteurs de comparaison,
le vecteur caractéristique et les plusieurs vecteurs de comparaison ayant à chaque fois plusieurs composantes,
dans lequel on prévoit une unité de processeur adaptée de manière à ce que

    a) il soit possible de déterminer à chaque fois, pour les composantes du vecteur caractéristique, leur capacité de discrimination ;
    b) il soit possible de déterminer, pour les composantes du vecteur caractéristique dont la capacité de discrimination est inférieure à une valeur seuil prédéfinie, au moins un premier écart partiel par rapport à au moins un groupe de composantes des vecteurs de comparaison ;
    c) il soit possible de déterminer, pour les composantes du vecteur caractéristique dont la capacité de discrimination est supérieure à la valeur seuil prédéfinie, des seconds écarts partiels par rapport aux composantes correspondantes des vecteurs de comparaison ;

d) il soit possible de déterminer, à partir du, au moins un, premier écart partiel et des seconds écarts partiels, les écarts entre le vecteur caractéristique et les plusieurs vecteurs de comparaison.

**10.** Produit programme d'ordinateur pour le calcul d'écarts entre un vecteur caractéristique d'un segment de signal vocal d'un signal vocal numérisé et plusieurs vecteurs de comparaison, le vecteur caractéristique et les plusieurs vecteurs de comparaison ayant à chaque fois plusieurs composantes, et qui se déroule sur une unité de processeur de manière à ce que

a) il soit possible de déterminer à chaque fois, pour les composantes du vecteur caractéristique, leur capacité de discrimination ;
b) il soit possible de déterminer, pour les composantes du vecteur caractéristique dont la capacité de discrimination est inférieure à une valeur seuil prédéfinie, au moins un premier écart partiel par rapport à au moins un groupe de composantes des vecteurs de comparaison ;
c) il soit possible de déterminer, pour les composantes du vecteur caractéristique dont la capacité de discrimination est supérieure à la valeur seuil prédéfinie, des seconds écarts partiels par rapport aux composantes correspondantes des vecteurs de comparaison ;
d) il soit possible de déterminer, à partir du, au moins un, premier écart partiel et des seconds écarts partiels, les écarts entre le vecteur caractéristique et les plusieurs vecteurs de comparaison.

## FIG 1

Sprach-signal SIG → | Merkmals-extraktions-modul FEM | → Merkmals-vektoren $O_i$ → | Suchmodul SM | → erkannte Äußerung → SPR

| EM Vergleichs-Modul VM |

Vergleichs-vektoren v

## FIG 3

| Monitor | — MON

| Drucker | — PRT

| Maus | — MAS

| Tastatur | — TAS

MEM

| Speicher |

| Input / Output |

CPU

IOS

BUS

PRZE

IFC

## FIG 2

```
┌─────────────────────┐
│   Komponenten des   │
│   Merkmalsvektors   ├── 201
│      sortieren      │
└─────────────────────┘
           │
           ▼
┌─────────────────────┐
│   Unterteilung in   │
│ "beste Komponenten" ├── 202
│     und "Rest"      │
└─────────────────────┘
           │
           ▼
┌─────────────────────┐
│  Gruppierung des    │
│      "Rests"        ├── 203
└─────────────────────┘
           │
           ▼
┌─────────────────────┐
│  Wert für jede Gruppe │
│     bestimmen       ├── 204
└─────────────────────┘
           │
           ▼
┌─────────────────────┐
│    Abstände zu      │
│  Vergleichsvektoren ├── 205
│     berechnen       │
└─────────────────────┘
```